Europäisches Patentamt

European Patent Office

Office européen des brevets

(11) Publication number: **0 400 420**
A2

# EUROPEAN PATENT APPLICATION

(21) Application number: **90109476.3**

(22) Date of filing: **18.05.90**

(51) Int. Cl.5: **C08L 27/06, C08G 18/10,**
**C08G 18/75**

(30) Priority: **19.05.89 US 354332**

(43) Date of publication of application:
**05.12.90 Bulletin 90/49**

(84) Designated Contracting States:
**AT BE CH DE ES FR GB IT LI LU NL**

(71) Applicant: **NORTON COMPANY**
**1 New Bond Street, Box 15008**
**Worcester, MA 01615-0008(US)**

(72) Inventor: **Petit, Dominique**
**Rue de Housse 60**
**B-4512 Housse-Belegny(BE)**
Inventor: **Ladang, Michael**
**Maison du Bois 25**
**B-4651 Herve(BE)**

(74) Representative: **Diehl, Hermann Dr. et al**
**Diehl & Glaeser, Hiltl & Partner**
**Flüggenstrasse 13**
**D-8000 München 19(DE)**

(54) **Polyvinyl chloride compositions.**

(57) Finished articles made of flexible PVC using the plastisol technology having a high resistance to heat and solvents, and a reduction in plasticizer migration by incorporating into the traditional plastisol ingredients, appropriate amounts of di- or polyisocyanates and di- or polyols, and/or di- or polyamines, which, upon heating, copolymerize with one another while the PVC is gelling, to form a polymer network within the article.

Fig.1

## POLYVINYL CHLORIDE COMPOSITIONS

Polyvinyl chloride (PVC) shows a unique behavior among polymers; a stable fluid suspension of polyvinyl chloride in a plasticizer (which suspension is called "paste" or "plastisol") can be formed by simple mixing techniques. When heated above 120°C., the compound leads to a homogeneous rubbery polymer that is similar to one obtained by the traditional melt extrusion. This process is called "gellation" and is amply described in the literature, e.g., PVC Technology (4th Edition), W.V. Titow (Elsevier).

A characteristic feature of flexible PVC is that it does not contain sites of suitable reactivity to enable it conveniently to be crosslinked by reaction with common reagents. Consequently, plasticized polyvinyl chloride is more prone to flow under sustained stress than are conventional cross-linked rubbers. Furthermore, the rate of flow increases more rapidly with increasing temperature than is true in the case of cross-linked rubbers. In more practical terms, this means that plasticized polyvinyl chloride suffers from excessive creep and stress relaxation, if subjected to sustained stress or strain, especially at elevated temperatures. It is, therefore, unsuited for application where sustained stress or strain has to be borne, unless fabric or other reinforcement is provided in order to restrict irreversible flow.

Another consequence of the lack of cross-links is that plasticized PVC swells in polar solvents to the extent of being completely dissolved in a few of them, tetrahydrofurane (THF) and cyclohexanone being the best known. A second limitation of plasticized PVC has been the ability of the plasticizers to migrate out of the PVC composition, especially the polar plasticizers.

These weaknesses are quite serious and have, therefore, limited the use of flexible PVC basically to room temperature applications, such as artificial leather, floor covering, carpet backing, gloves, toys, etc.. In glazing applications, there are also limitations to using flexible PVC gaskets, because when the PVC is in direct contact with; for example, plexiglass and polycarbonate glazing sheets, the plasticizer migration can cause microcracks in the plastic sheet, thus reducing its mechanical resistance. These and other difficulties experienced with the prior art forms of PVC plastisol have been obviated in a novel manner by the present invention.

The present invention provides a process of forming a polyvinyl chloride composition in accordance with independent claim 1, a multi-part system adapted to form a PVC composition having improved resistance to heat and to solvent according to independent claim 14, a polyvinyl chloride composition according to independent claim 25, 26 and 32 and a PVC composition which is a modification of a conventional plastisol according to independent claim 36. Further advantageous features of the different aspects of the invention are evident from the corresponding dependent claims and from the following description and drawings. The claims are intended to be understood as a first non-limiting approach of defining the invention in general terms.

It is, therefore, an outstanding aspect of the invention to provide a PVC composition exhibiting the characteristics of a vulcanized sheet with non-melting characteristics and reduced swelling in solvents.

Another aspect of this invention is the provision of a process for forming a modified PVC having an improved resistance to heat and solvents.

A further aspect of the present invention is the provision of a process for forming a modified PVC with reduced plasticizer migration.

With the foregoing and other objects in view, which will appear as the description proceeds, the invention resides in the combination and arrangement of steps and the details of the composition hereinafter described and claimed, it being understood that changes in the precise embodiment of the invention herein disclosed may be made within the scope of what is claimed without departing from the spirit of the invention.

In general, the invention is a modified PVC composition in which a conventional plastisol is improved by the presence of a polymer network which exists throughout the composition. In the preferred embodiment, the polymer network would be polyurethane or polyurea. Thus, the polymerizable molecules could be a mixture of a first monomer or prepolymer group consisting of diisocyanates, polyisocyanates, and mixtures thereof, and a second monomer or prepolymer group consisting of diols, polyols, diamine, polyamines, and mixtures thereof. The polymerizable molecules could also be adducts formed of the monomers recited above. The preferred isocyanate is an IPDI (isophorone diisocyanate). The preferred polyol is $\epsilon$-caprolactone (epsilon-caprolactone).

The invention also involves a process for making the above-described compositions. The invention alters conventional plastisol formation, by adding polymerizable molecules at various stages in the formation of the plastisol. Then, the polymerizable molecules are polymerized, so that a second polymer phase is formed substantially throughout the resulting composition to form a network-like structure, which gives the resulting composition improved properties.

The process can be usefully varied by providing a blowing agent in the mixture and causing the agent to expand or foam the mixture prior to the polymerization of the polymerizable molecules. The result is a foamed product with improved properties.

The polymerizable molecules in the form of an isocyanate component can be added as a monomer, as a polymer, or as an adduct. In the case of the aromatic monomer (or other fast reacting isocyanate component), however, it would be added as the last component of the system (or otherwise immediately before product formation) in order to avoid premature reaction.

The character of the invention, however, may be best understood by reference to one of its structural forms, as illustrated by the accompanying drawings in which:

Figure 1 is a flow chart of the steps in a first process for forming the modified PVC product incorporating the principles of the present invention,

Figure 2 is a flow chart of the steps in a second process,

Figure 3 is a flow chart of the steps in a third process,

Figure 4 is a schematic view of apparatus for forming a product from the modified PVC composition,

Figure 5 is a flow chart of the steps of a generalized view of the process, and

Figure 6 is a chart showing which of the processes is preferred for each of the various polyisocyanates.

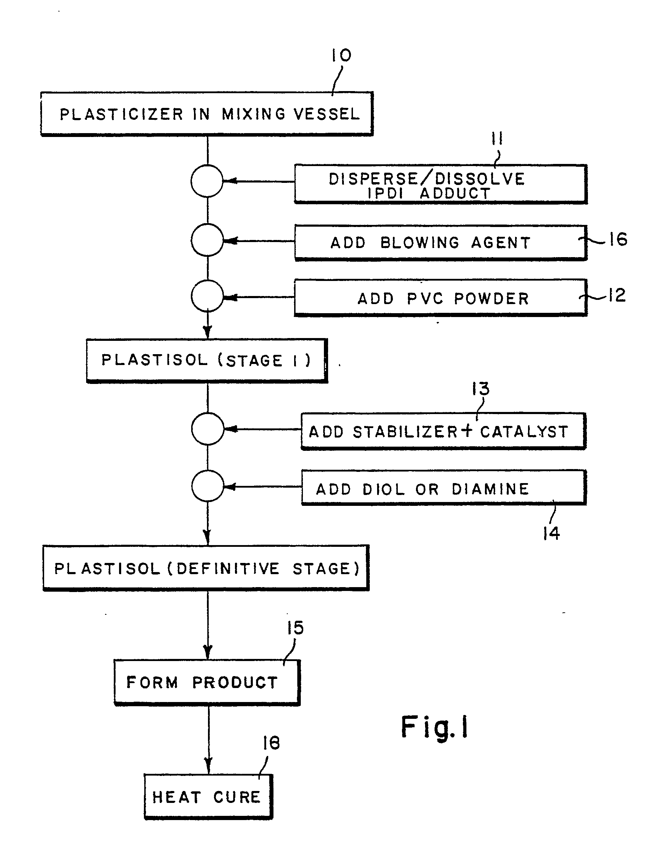

Referring first to Figure 1, which shows the general features of the invention, the process, indicated generally by the reference numeral 10, consists of a first step 11 of forming a first mixture of a polyisocyanate-type prepolymer with a plasticizer. A second step 12 has to do with forming a second mixture of the first mixture and an emulsion grade or microsuspension grade PVC to form stage 1 of the plastisol. The third step (13 and 14) consists of combining the stage 1 plastisol with a secondary prepolymer such as a diol or a diamine, and the addition of a stabilizer and a catalyst to reach the definitive stage of a plastisol. The fourth step 15 relates to forming the product from the Definitive Stage plastisol and beginning gelling. The product is then heat cured in step 16. An alternative step 17 can take place between the step 11 and the step 12 by adding a foaming agent and initiator to the mixture to cause the final product to be foamed.

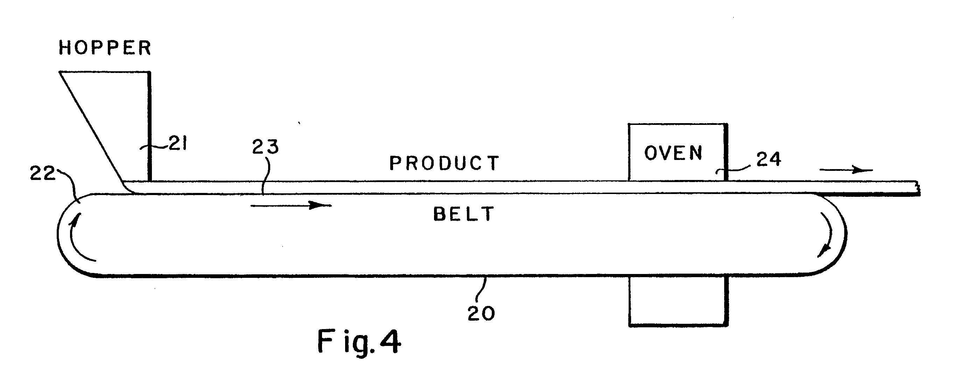

Figure 4 shows apparatus 20 for completing the forming of the modified PVC product. The final mixture (Definitive Stage) from the process is placed in a hopper 21 and passes onto a belt 22 to form a product 23 in the form of a coating. The product is carried downstream to an oven 24 where complete gelling and curing takes place.

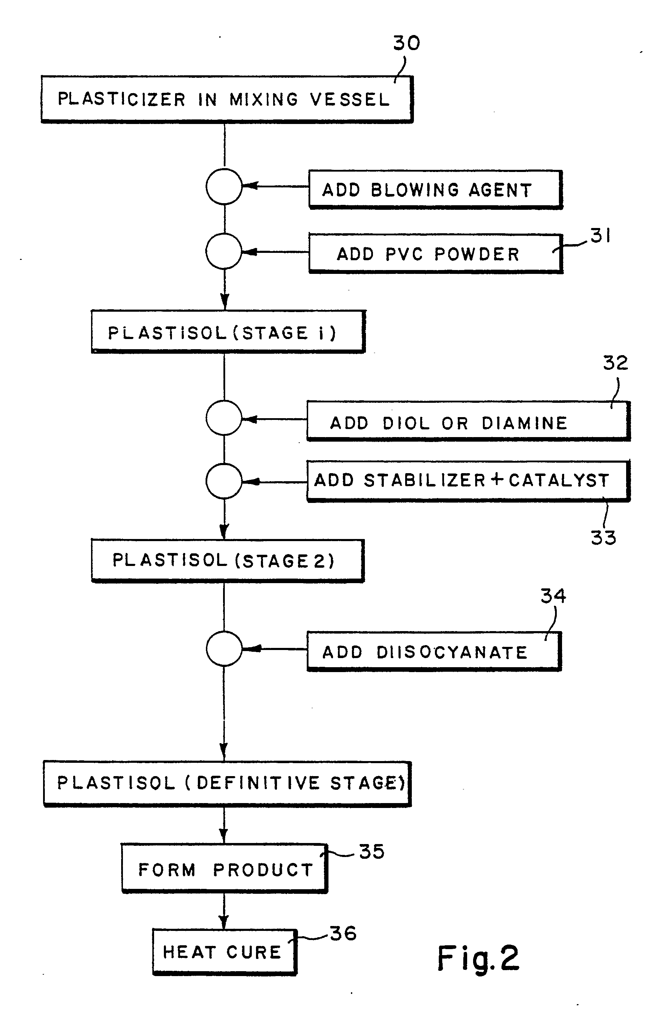

Figure 2 shows a modified form of the process, indicated generally by the reference numeral 30 in which the first step 31 the PVC powder is mixed with the plasticizer. A blowing agent may be added at that time if a foamed product is desired. This mixture constitutes Stage 1 of the plastisol. The second step 32 consists in adding a polyol or polyamine, followed by the third step 33 of adding the stabilizer and catalyst. This results in Stage 2 of the plastisol. Finally, the fourth step 34 consists of the addition of a polyisocyonate, which results in reaching the definitive stage of the plastisol. This is followed by the fifth step 35 in which the product is formed and the sixth step 36 in which the product is gelled and cured. The steps 35 and 36 can be carried out on the apparatus shown in Figure 4.

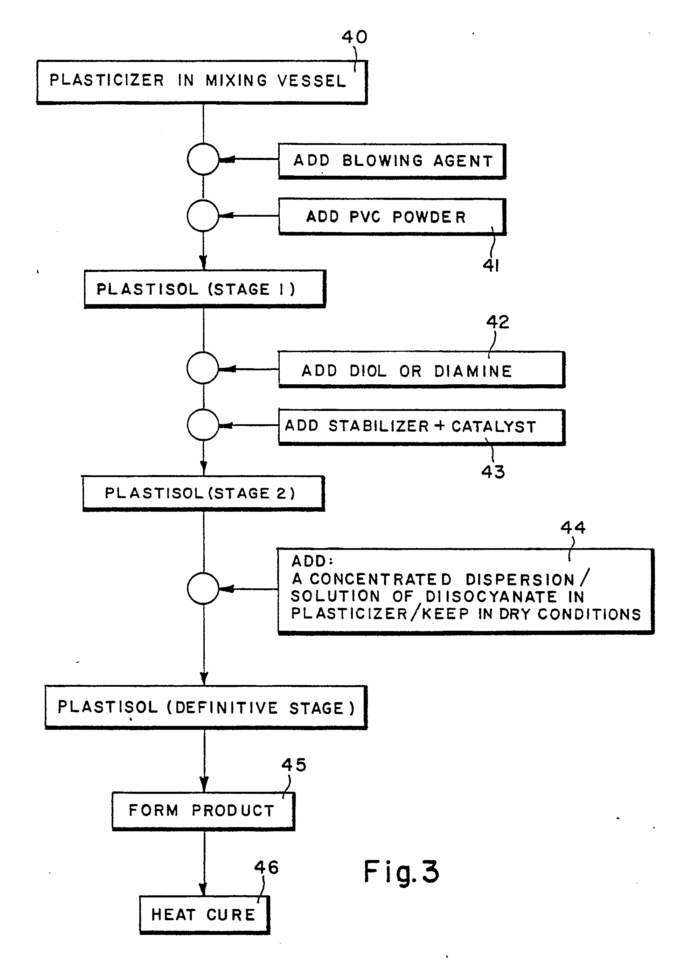

Figure 3 shows a still further variation of the process, designated in general by the reference numeral 40. The first step 41 consists of mixing the PVC with the plasticizer. At this stage, a blowing agent may be added to the mixture if a foamed product is desired. The Stage 1 of the plastisol has been achieved at this point. The second step 42 consists of adding to the mixture the polyol or the polyamine. The third step 43 consists of adding the.stabilizer and the catalyst to the mixture, thus reaching Stage 2 of the plastisol. The fourth step 44 consists of making a concentrated dispersion or solution of a polyisocyanate in plastisizer and keeping it in a dry condition until it is added to the Stage 2 of the plastisol. The definitive stage of the plastisol is then reached and is formed in the fifth step 45 into the product. In the sixth step 46 the product is gelled and cured. Steps 45 and 46 can be carried out on the apparatus shown in Figure 4.

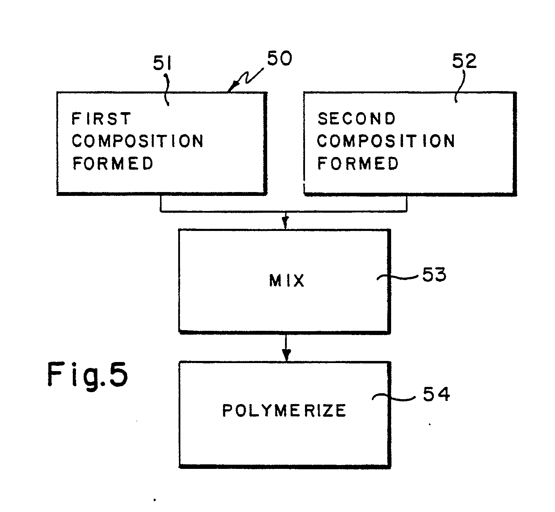

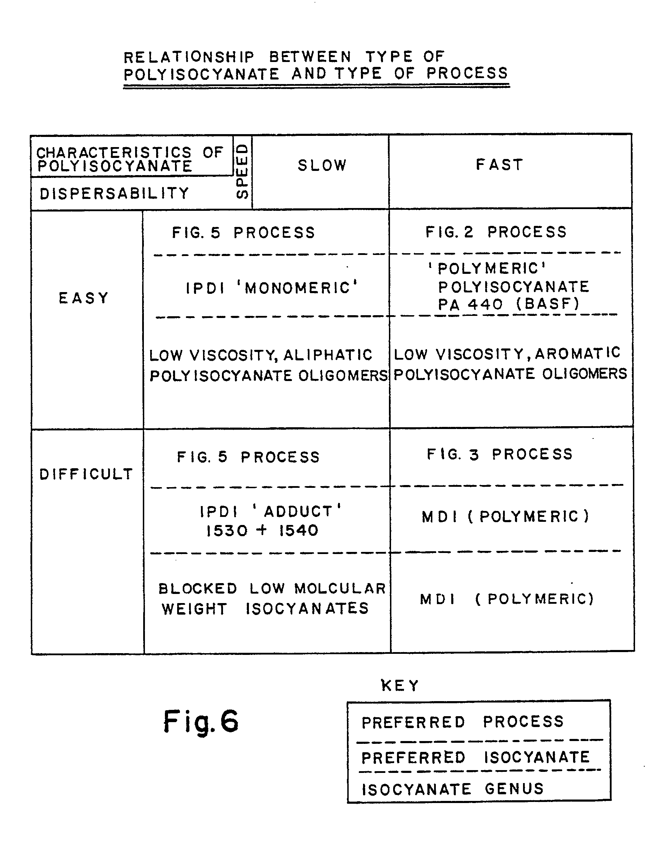

Figure 5 shows a generalized view of the present invention in the form of a process, indicated generally by reference numeral 50. In step 51, a first composition is formed which includes a first, polyisocyanate prepolymer and may include some of the other components of the final mixture. In step 52, a second composition is formed which may include a second prepolymer which is polymerizable with the first prepolymer, and may include other components of the final mixture. In step 53, the first composition and second composition are mixed to form a final mixture which is a mixture of a plastisol system and a polymerizable polyisocyanate system. In step 54, the final mixture is caused to polymerize to form a polyvinyl chloride composition.

In the preferred embodiment, the PVC was an emulsion grade polyvinyl chloride with a K value between

68 and 75 (preferably 74) manufactured and sold by SOLVAY under the trademark SOLVIC 374 MB or 372 HA. Microsuspension grade PVC or mixtures of the two grades can also be used. The plasticizers were a mixture of phthalate plasticizers, including BBP (butylbenzylphthalate) sold by Monsanto under the trademark SANTICIZER 160; DIDP (diisodecylphthalate) sold by UCB, and a phosphate plasticizer TCP (tricresylphosphate) sold by Bayer·AG. under the trademark DISFLAMMOL TKP.

The stabilizers consisted of epoxidized soybean oil sold by Lankro under the trademark LANKROFLEX GE and a barium/cadmium compound sold by Atochem under the trademark STAVINOR BC 731.

The diisocyanate was IDPI or isophorone diisocyanate - 3-isocyanatomethyl-3, 5, 5-trimethylcyclohexylisocyanate, used as a monomer, polymer or $\epsilon$-caprolactame adduct, all sold by Huels respectively under the trademarks IPDI, IPDI B1540 and IPDI B1530.

The polyol was poly-$\epsilon$-caprolactone sold by Solvay under the trademark CAPA 316.

The catalyst used was tin dibutyldilauryl sold by Air Products under the trademark DABCO T12. The blowing agent was GENITRON AC SP4 sold by Shering Industrial Chemicals and the activator was FERRO 5473A sold by Ferro (Holland)BV, both designations being trademarks of the respective companies.

In a practical application of the process, the ingredients were thoroughly mixed in a high speed mixer in the desired proportions. The final temperature of the various mixtures was about 30°C and the viscosity was typically from 2,000 to 25,000 mPa.s as measured with a Brookfield Viscosimeter using Spindle 5 at 20 rpm. The mixtures were then cast on a release conveyor belt with a gap of between 0.2 and 2.5 mm. The cast film was heat treated in an oven for from 1 to 10 minutes at 205°C. The resulting foamed sheets had densities of 150    50 kg/m$^3$ and thicknesses of from 1.5 to 20 mm.

In the case of the unfoamed product, the density was 1200± 50 Kg/m$^3$ and thickness of 0.2 to 2.5 mm.

The various samples have been submitted to the following tests:

1. Gel Content:

A precisely weighed portion of the composition was placed in a container made of 0.074 mm (200 mesh) screen and suspended in a boiler, arranged so that a rapid flow of refluxing cyclohexanone through the screen and over the sample occurred. The undissolved portion of the sample was removed after one hour of exposure to the refluxing solvent, freed of solvent by heating, and again weighed. The "percent unextracted" was calculated as one hundred times the ratio of the weight of the extracted sample to the weight of the original sample.

2. Tensile Test:

Sheet samples were die-cut according to ASTM D412 and submitted to a tensile test using an Instron 1122 at a speed of 100 mm/min at various temperatures. The Tensile Strength and Modulus were assessed following ASTM D-412.

3. Creep Resistance:

Samples were die-cut according to ASTM D412 from 1mm thick sheet. A 100 g weight was hung at one end of the sample while the other end was fixed in an oven at 100°C. The elongation was measured after 30 sec. The results were expressed by dividing the elongation by the tension calculated in N/mm$^2$.

4. Plasticizer Migration:

A sheet of flexible compound (1 mm thickness) was placed against a 100 $\mu$m thick polycarbonate film (produced by General Electric under the trademark LEXAN) at 50°C for increasing periods of time. After removal of the sheet sample, the polycarbonate film was analyzed by transmission using an IR Perkin Elmer 781, scanning 3 min slit 1. The intensity of the peak at 1710 cm$^{-1}$ (from phthalate or phosphate plasticizer) was divided by the intensity of the peak at 1765 cm$^{-1}$ (from carbonyl in polycarbonate).

5. Compression Set:

For foamed samples, the Compression Set was measured after 25% compression at the indicated temperature during 22 hrs., followed by 24 hrs. recovery at room temperature, according to ASTM D1667-76.

## EXAMPLE I

Samples 1 thru 5 were prepared using the composition as per Table 1. The tensile properties are reported in Table 2, whereas the other properties are in Table 3. Composition is expressed by weight.

TABLE 1

INGREDIENTS                                          SAMPLES

|                          |  1   |  2   |  3   |  4   |  5   |
|--------------------------|------|------|------|------|------|
| Film Quality (°)         |  S   |  S   |  S   |  S   |  GI  |
| PVC (Solvic 372HA)       | 100  | 100  | 100  | 100  | 100  |
| TCP (Plasticizer)        |  90  |  90  |  90  |  90  |  90  |
| Epoxidized Soybean Oil   |  10  |  10  |  10  |  10  |  10  |
| Ba/Cd Stabilizer         | 0.5  | 0.5  | 0.5  | 0.5  | 0.5  |
| CAPA 316                 |  0   | 5.5  |  11  |  48  |  64  |
| IPDI                     |  0   |  6   |  12  |  52  |  69  |
| DABCO T12                |  0   | 0.5  | 0.5  | 0.5  | 0.5  |

(°) S = Smooth
    GI = Gas Inclusion

TABLE 2:

| TENSILE PROPERTIES | | | | | | |
|---|---|---|---|---|---|---|
| | | -SAMPLES- | | | | |
| | | 1 | 2 | 3 | 4 | 5 |
| RETENTION OF TENSILE STRENGTH WITH TEMPERATURE | | | | | | |
| (N/cm$^2$) | | | | | | |
| at | 23°C | 8.5 | 5.1 | 7.9 | 6.3 | 2.4 |
| | 100°C | >0.79 | >0.63 | 0.69 | 0.9 | 0.28 |
| | 110°C | >0.49 | 0.40 | 0.49 | 0.78 | 0.22 |
| | 120°C | 0.28 | 0.25 | 0.32 | 0.41 | 0.24 |
| | | 1 | 2 | 3 | 4 | 5 |
| RETENTION OF TENSILE STRENGTH (%) WITH TEMPERATURE | | | | | | |
| | 100°C | 9.3 | 12.4 | 8.7 | 14.3 | 11.7 |
| | 110°C | 5.8 | 7.8 | 7.2 | 12.4 | 9.2 |
| | 120°C | 3.3 | 4.9 | 4.1 | 6.5 | 10.0 |
| | | 1 | 2 | 3 | 4 | 5 |
| RETENTION OF MODULUS AT 50% ELONGAATION WITH TEMPERATURE | | | | | | |
| Elongation (N/cm2) | | | | | | |
| at | 23°C | 1.8 | 1.8 | 2.4 | 3.8 | 1.34 |
| | 100°C | 0.21 | 0.21 | 0.46 | 0.92 | 0.21 |
| | 110°C | 0.14 | 0.17 | 0.40 | 0.86 | 0.20 |
| | 120°C | 0.08 | 0.14 | 0.32 | 0.76 | 0.18 |
| | | 1 | 2 | 3 | 4 | 5 |
| RETENTION OF MODULUS AT 5% ELONGATION (%) WITH TEMPERATURE | | | | | | |
| | 100°C | 11.7 | 11.7 | 19.2 | 24.2 | 15.7 |
| | 110°C | 7.8 | 9.4 | 16.7 | 22.6 | 14.9 |
| | 120°C | 4.4 | 7.8 | 13.3 | 20.0 | 13.4 |

TABLE 3:

| OTHER PROPERTIES | | | | | |
|---|---|---|---|---|---|
| | -SAMPLES- | | | | |
| | 1 | 2 | 3 | 4 | 5 |
| Creep Resistance (mm) | 314 | 250 | 134 | 115 | - |
| Gel Content (%) | 0 | 3 | 12 | 30 | 50 |
| Plasticizer Migration | 1 | | | 4 | |
| (Peak ratio after) | (1) | | | (1) | |
| 0 day | 0 | | | 0 | |
| 1 day | 0.69 | | | 0.11 | |
| 2 days | 1.74 | | | 0.22 | |
| 7 days | 1.93 | | | 0.17 | |
| 8 days | 2.14 | | | 0.25 | |
| 11 days | 2.10 | | | 0.38 | |
| 14 days | 1.93 | | | 0.38 | |

(1) in these formulations TCP was replaced with butyl benzyl phthalate.

## EXAMPLE II

Samples (6 through 9) were prepared using the composition indicated in Table 4, and the gel was percentage measured.

TABLE 4:

| INGREDIENTS | -SAMPLES- | | | |
|---|---|---|---|---|
| | 6 | 7 | 8 | 9 |
| PVC (Solvic 372HA) | 100 | 100 | 100 | 100 |
| BBP Plasticizer | 90 | 90 | 90 | 90 |
| Epoxidised Soybean Oil | 10 | 10 | 10 | 10 |
| Ba/Cd Stabilizer | 0.5 | 0.5 | 0.5 | 0.5 |
| CAPA 316 | 0 | 48 | 48 | 48 |
| IPDI (monomeric) | 0 | 21 | 0 | 0 |
| IPDI 1530 | 0 | 0 | 52 | 0 |
| IPDI 1540 | 0 | 0 | 0 | 52 |
| DABCO T12 | 0 | 0.5 | 0.5 | 0.5 |
| Gel Content | 0 | 60 | 29 | 31 |
| Film Quality | S | GI | GI | S |
| S = Smooth | | | | |
| GI = Gas inclusions | | | | |

From this table, it is clear that various types of alternative diisocyanates (monomeric, or capped by a labile group) can also be used. In the case of monomeric diisocyonates, the composition must be used within 1/2 hour.

EP 0 400 420 A2

## EXAMPLE III

Another application of flexible PVC using the technology of this invention is foamed gaskets, where the modified PVC, in addition to the normal ingredients, include a chemical blowing system. As per Table 5, the temperature limitation of the standard compound appears as a set that the foam takes after it has been compressed under temperature (referred to here as Compression Set). Samples 10 and 11 were prepared using the composition of Table 5, and the Compression Set was measured.

TABLE 5:

| INGREDIENTS | | -SAMPLES- | |
|---|---|---|---|
| | | 10 | 11 |
| PVC Solvic 374MB | | 100 | 100 |
| DIDP | | 100 | 100 |
| BBP | | 25 | 25 |
| Genitron AC SP4 | | 10 | 10 |
| Ferro 5473A | | 0.75 | 0.75 |
| CAPA 316 | | 0 | 19 |
| IPDI 1530 | | 0 | 23 |
| DABCO | | 0 | 0.50 |
| Specific Gravity (kg/m3) | | 105 | 114 |
| Compression Set | | | |
| at | $23^\circ$ C | 12 | 7 |
| | $50^\circ$ C | 61 | 50 |
| | $70^\circ$ C | 100 | 60 |

The technique described herein can be applied to substantially all PVC's and plasticizers which are suitable for plastisols.

Other -di- or poly-isocyanates, other -di- or polyols, and other di- or polyamines can also be used. More generally all constituents of polyurethanes (copolymers of poly-isocyanates and polyols), polyureas (copolymers of poly-isocyanates and polyamines), etc. can be used. Furthermore, the invention can be practiced by starting with an adduct of a poly-isocyanate with a polyol or polyamine, or with monomeric or polymeric isocyanates.

As a general matter, the type of polyisocyanate dictates what process should be used. There are two criteria which tend to link a type of polyisocyanate to a type of process:

a) Speed of Reaction/Stability (vs. ambiant moisture and diol/diamine):
-Blocked diisocyanates (adducts): very stable (days at Room Temperature)
Their activity is triggered by the High Oven Temperature.
-Aliphatic diisocyanates: slow reacting (1/2 hour at Room Temperature)
-Aromatic diisocyanates: very reactive (minutes at Room Temperature).

b) Dispersability/Dissolution Speed (in plasticizer or in plastisol):
-Fluid, liquid: ease and speed of dispersion in amounts of viscous liquids.
-Solids, crystals, viscous liquid: requires long mixing in fluid diluent.

The following chart indicates the characteristics of the various forms of diisocyanates that dictate the particular process that should be used:

Standard additives can be used, such as fillers, pigments, biocides, extenders (PVC microsuspension, copolymers; EVA, nitrile rubber, etc.), viscosity depressors and/or stabilizers, etc.

8

One class of special ingredients of particular interest are PVC plasticizers having amino, hydroxy or isocyanate active groups. By extending the polymerization step of the present invention to the plasticizer, an 'in-situ' polymeric plasticizer could be formed; an option which is now only available in PVC extrusion or calendering. That is because polymeric plasticizers are too viscous to be mixed into plastisol compositions.

Examples which were given only recite limited applications (sheet and foam gasket), but the invention is clearly applicable to other PVC processing techniques: dip coating (e.g., for gloves), wire basket coating, etc.

While it will be apparent that the illustrated embodiments of the invention herein disclosed are calculated adequately to fulfill the objects and advantages primarily stated, it is to be understood that the invention is susceptible to variation, modification, and change within the spirit and scope of the subjoined claims.

## Claims

1. A process of forming a polyvinyl chloride composition, comprising the steps of:
   (a) forming a first composition including a polyisocyanate prepolymer
   (b) forming a second composition,
   (c) mixing the first composition and second composition so that the resulting final mixture contains a plastisol system (including PVC and a plasticizer), mixed with a polymerizable polyisocyanate system (including the polyisocyanate prepolymer and a secondary prepolymer which reacts with the polyisocyanate prepolymer), and (d) causing the polymerizable system to polymerize within the plastisol system.

2. A process as recited in Claim 1, wherein the PVC is selected from the class consisting of emulsion grade PVC, microsuspension PVC, and mixtures thereof.

3. A process as recited in Claim 1 or 2, wherein the plasticizer is a phthalate.

4. A process as recited in Claim 3, wherein the phthalate is selected from the class consisting of butylbenzylphthalate and diisodecylphthalate.

5. A process as recited in any of claims 1 to 4, wherein the plasticizer is tricresylphosphate.

6. A process as recited in any of claims 1 to 5, wherein a stabilizer is added with a catalyst.

7. A process as recited in Claim 6, wherein the stabilizer is selected from the group consisting of barium/cadmium compounds, epoxidized soybean oil, and mixtures thereof.

8. A process as recited in any of claims 1 to 7, wherein the polisocyanate is a form of isophorone diisocyanate-3-isocyanatomethyl-3,5,5-trimethylcyclohexylisocyanate.

9. A process as recited in any of claims 1 to 8 wherein the said secondary prepolymer is selected from the group consisting of polyols, polyamines, polyisocyanate adducts, poly-$\epsilon$-caprolactone and mixtures thereof.

10. A process as recited in any of claims 1 to 9, wherein the plasticizer is capable of polymerizing with the polyisocyanate system.

11. A process as recited in any of claims 1 to 10, wherein a catalyst is added before the polyisocyanate.

12. A process as recited in any of claims 1 to 11 wherein a blowing agent is added.

13. A process as recited in any of claims 1 to 12 wherein the secondary prepolymer is polymerizable even when no catalyst is present, and the polyisocyanate is added immediately prior to step d.

14. A multi-part system adapted to form a PVC composition having improved resistance to heat and to solvents, and reduced migration of plasticizer, comprising:
   (a) a first part containing a polyisocyanate prepolymer, and,
   (b) a second part
wherein PVC, plasticizer, and a secondary prepolymer capable of polymerizing with the polyisocyanate prepolymer are each present in at least one of the parts.

15. A multi-part system adapted to form a PVC composition as recited in Claim 14, wherein the secondary prepolymer is a material selected from the group consisting of polyols and polyamines, and mixtures thereof.

16. A multi-part system adapted to form a PVC composition as recited in Claim 14 or 15 wherein the PVC is emulsion grade.

17. A multi-part system adapted to form a PVC composition as recited in any of claims 14 to 16, wherein the plasticizer is a phthalate.

18. A multi-part system adapted to form a PVC composition as recited in Claim 17, wherein the phthalate is selected from the class consisting of butylbenzylpthalate and diisodecylphthalate.

19. A multi-part system adapted to form a PVC composition as recited in any of claims 14 to 18, wherein the plasticizer is tricresylphosphate.

20. A multi-part system adapted to form a PVC composition as recited in any of claims 14 to 19, wherein at least one part includes a stabilizer.

21. A multi-part system adapted to form a PVC composition as recited in Claim 20, wherein the stabilizer is chosen from the group consisting of barium/cadmium compounds, epoxidized soybean oil, and mixtures thereof.

22. A multi-part system adapted to form a PVC composition as recited in any of claims 14 to 21, wherein the secondary prepolymer is selected from the group consisting of polyols, polyamines, polyisocyanate adducts, and mixtures thereof.

23. A multi-part system adapted to form a PVC composition as recited in claim 17, wherein the secondary prepolymer includes poly-$\epsilon$-caprolactone.

24. A multi-part system adapted to form a PVC composition as recited in any of claims 14 to 23, wherein at least one part includes a catalyst.

25. A polyvinyl chloride composition, comprising:
   (a) a PVC
   (b) a plasticizer, and
   (c) a polymerization product of a polymerizable system including a polyisocyanate.

26. A polyvinyl chloride composition as recited in claim 25, wherein the system includes molecules selected from the class consisting of diols, polyols, diamines and polyamines and mixtures thereof.

27. A polyvinyl chloride composition as recited in claim 25 or 26, wherein the system includes a IPDI and a poly-$\epsilon$-caprolactone.

28. A process for forming polyvinyl chloride composition comprising the steps of:
   (a) mixing a polyisocyanate prepolymer with a plasticizer which is suitable for forming a plastisol,
   (b) mixing the mixture resulting from step (a) with at least a portion of a polymerizable system and,
   (c) causing the polymerizable system to polymerize within the mixture from step (b).

29. A process as recited in claim 28, wherein the polymerizable system includes molecules selected from the group consisting of polyisocyanates, polyols, polyamines, adducts thereof, and mixtures thereof.

30. A process as recited in claim 28 or 29, wherein the polymerizable system includes a member of the group consisting of monomers of, polymers of, and adducts of an polyisocyanate.

31. A process as recited in any of claims 28 to 30, wherein the polyisocyanate is isophorone diisocyanate.

32. A process for forming a polyvinyl chloride composition comprising the steps of:
   (a) forming a PVC plastisol-like composition into which there are mixed polymerizable molecules,
   (b) polymerizing the molecules within the plastisol-like composition.

33. A process as recited in Claim 32, wherein the polymerizable molecules are selected from the group consisting of polyisocyanates, polyols, polyamines, adducts thereof, and mixtures thereof.

34. A process as recited in claim 32 or 33 wherein the polymerizable molecules include a member of the group consisting of monomers of, polymers of, and adducts of an polyisocyanate.

35. A process as recited in claim 33 or 34 wherein the polyisocyanate is isophorone diisocyanate.

36. A PVC composition which is a modification of conventional plastisol,
wherein the improvement comprises the fact that the composition contains a polymerization product formed from a first group consisting of diisocyanates, polyisocyanates, and mixtures of diisocyanates and socyanates, and a second group consisting of diols, polyols, diamines, polyamines and molecules which polymerize with isocyanates.

37. A polyvinyl chloride composition which is a modification of a conventional plastisol,
wherein the improvement comprises the fact that a polymer network exists throughout the composition.

38. A PVC composition as recited in Claim 37, wherein the polymer network is a polyurethane, a polyurea, or a mixture of polyurethane and polyurea.

39. A PVC composition as recited in Claim 37 or 38, wherein the polymer network includes a plasticizer.

40. A PVC composition as recited in any of claims 37 to 39 wherein the composition has been foamed.

41. A PVC composition as recited in any of claims 37 to 40 wherein the polymer network consists of a polyisocyanate in the range of 50-70% of the weight of PVC and a secondary prepolymer selected from the group consisting of polyols, polyamines, polyisocyanates adducts, and other molecules which polymerize with isocyanates, in the range from 50 to 65% of the weight of the PVC.

Fig.1

30

PLASTICIZER IN MIXING VESSEL

○ ← ADD BLOWING AGENT

○ ← ADD PVC POWDER   31

PLASTISOL (STAGE 1)

○ ← ADD DIOL OR DIAMINE   32

○ ← ADD STABILIZER + CATALYST

33

PLASTISOL (STAGE 2)

34

○ ← ADD DIISOCYANATE

PLASTISOL (DEFINITIVE STAGE)

FORM PRODUCT   35

HEAT CURE   36

Fig.2

Fig.3

HOPPER

21

23

22

PRODUCT

OVEN

24

BELT

20

Fig. 4

EP 0 400 420 A2

Fig.5

RELATIONSHIP  BETWEEN  TYPE  OF
POLYISOCYANATE  AND  TYPE  OF  PROCESS

| CHARACTERISTICS OF POLYISOCYANATE  DISPERSABILITY | SPEED | SLOW | FAST |
|---|---|---|---|
| EASY | | FIG. 5 PROCESS ─ ─ ─ ─ ─ ─ ─ ─ ─ ─ IPDI 'MONOMERIC' ─ ─ ─ ─ ─ ─ ─ ─ ─ LOW VISCOSITY, ALIPHATIC POLYISOCYANATE OLIGOMERS | FIG. 2 PROCESS ─ ─ ─ ─ ─ ─ ─ ─ ─ 'POLYMERIC' POLYISOCYANATE PA 440 (BASF) ─ ─ ─ ─ ─ ─ ─ LOW VISCOSITY, AROMATIC POLYISOCYANATE OLIGOMERS |
| DIFFICULT | | FIG. 5 PROCESS ─ ─ ─ ─ ─ ─ ─ ─ ─ ─ IPDI 'ADDUCT' 1530 + 1540 ─ ─ ─ ─ ─ ─ ─ ─ ─ BLOCKED LOW MOLCULAR WEIGHT ISOCYANATES | FIG. 3 PROCESS ─ ─ ─ ─ ─ ─ ─ ─ ─ MDI (POLYMERIC) ─ ─ ─ ─ ─ ─ ─ MDI (POLYMERIC) |

KEY

## Fig. 6

| PREFERRED PROCESS |
|---|
| PREFERRED ISOCYANATE |
| ISOCYANATE GENUS |